# EUROPÄISCHE PATENTSCHRIFT

(11) **EP 1 483 904 B1**
(45) Veröffentlichungstag und Bekanntmachung des Hinweises auf die Patenterteilung: **16.07.2008**
(21) Anmeldenummer: 03743811.6
(22) Anmeldetag: 20.02.2003
(51) Int. Cl.: H04N 5/247, G02B 21/36

(54) **OPTISCHES BILDAUFNAHME- UND BILDAUSWERTESYSTEM**
OPTICAL IMAGE RECORDING AND IMAGE EVALUATING SYSTEM
SYSTEME OPTIQUE DE PRISE DE VUE ET D'INTERPRETATION

(30) Priorität: 12.03.2002 DE 10210831
(43) Veröffentlichungstag der Anmeldung: 08.12.2004
(73) Patentinhaber: Carl Zeiss AG, 73446 Oberkochen (DE)
(72) Erfinder: DAVIDOVICI, Dan, 85276 Pfaffenhofen a.d.Ilm (DE)
(74) Vertreter: Gnatzig, Klaus
(86) Internationale Anmeldenummer: PCT/EP2003/001702
(87) Internationale Veröffentlichungsnummer: WO 2003/077537

(56) Entgegenhaltungen:
- DE-A- 4 408 072
- DE-A- 19 921 127
- US-A- 3 908 082
- US-A- 4 862 257
- US-A- 5 365 084
- US-A- 5 412 200
- US-A- 6 046 431
- ANONYMOUS: "Corin Products, Electronic Imaging Systems" INTERNET ARTICLE, [Online] XP002241090 Gefunden im Internet: <URL:http://www.cordin.com/productsie.html > [gefunden am 2003-05-14] in der Anmeldung erwähnt

## Beschreibung

Die vorliegende Erfindung betriff ein Optisches Bildaufnahme- und Bildauswertesystem mit einem Abbildungsstrahlengang und mindestens zwei Digitalkameras und einem Strahlteiler, der das Licht des Abbildungsstrahlenganges aufteilt und zu den beiden Digitalkameras führt.

Ein derartiges System wird von der Firma Cordin unter der Bezeichnung 220-8 angeboten. Das System enthält insgesamt acht Digitalkameras. Die Einstellungen der einzelnen Digitalkameras, z.B. die Belichtungszeiten jeder der Kameras sind unabhängig von einander einstellbar. Das System dient zur Aufnahme von Bildserien mit hoher Geschwindigkeit. Demzufolge wird die Bildaufnahme der verschiedenen Kameras zeitlich nacheinander gestartet, so dass durch die Gesamtheit der nacheinander mit den verschiedenen Kameras aufgezeichneten Einzelbilder die gewünschte Bildserie entsteht. Ein Einsatz in der Fluoreszenzanalyse ist nicht vorgesehen.

Ein mikroskopisches optisches Bildaufnahmesystem nach dem Oberbegriff des Anspruchs 1 ist aus der DE 199 21 127 A1 bekannt. Aus der US 5 412 200 A ist weiterhin ein teleskopisches System mit zwei Kameras bekannt, von denen eine eine Wellenfrontkamera ist. Die mit der Wellenfrontkamera aufgezeichneten Informationen werden dann genutzt, um die durch atmosphärische Störungen verursachten Bildeffekte in den mit der anderen Kamera aufgenommenen Bildern zu eliminieren.

In der Fluoreszenzanalyse und in der Fluoreszenzmikroskopie sind Anwendungen bekannt, die bisher nur mit Laser-Scan Mikroskopen durchführbar sind. Beispiele hierfür sind Emission-Ratio Messungen und Colokalisation von Teilchen. Laser-Scan Mikroskope haben jedoch den Nachteil, dass sie technisch sehr aufwendig sind und sie andererseits für die Aufnahme großer Bildfelder relativ große Aufnahmezeiten haben, die bis zu wenigen Sekunden betragen können. Bei sehr schnellen Diffusionsvorgängen können diese Aufnahmezeiten zu lang sein, um detektierte Unterschiede zutreffend zu interpretieren. Beispiele für ein Laser Scan Mikroskop und damit durchführbare Fluoreszenzanalysen sind beispielsweise in dem Prospekt "Axiovert 200" der Anmelderin mit dem Druckvermerk 40-085d/01.01 beschrieben.

Es ist das Ziel der vorliegenden Erfindung, ein optisches Bildaufnahme- und Bildauswertesystem zu schaffen, mit dem bisher nur der Laser-Scan Mikroskopie vorbehaltene Fluoreszenzanwendungen auch mit konventionellen, ganze Bildfelder simultan übertragenden mikroskopischen oder makroskopischen Systemen durchgeführt werden können.

Dieses Ziel wird erfindungsgemäß durch ein optisches Bildaufnahme- und Bildauswertesystem mit den Merkmalen des Anspruches 1 gelöst. Vorteilhafte Ausführungsformen der Erfindung ergeben sich aus den Merkmalen der abhängigen Ansprüche.

Das erfindungemäße optische Bildaufnahme- und Bildauswertesystem weist einen Abbildungsstrahlengang, mindestens zwei Digitalkameras und einen Strahlteiler, der das Licht des Abbildungsstrahlenganges aufteilt und jeweils einen Teil davon zu den Digitalkameras führt, auf. Die Startzeitpunkte der Bildaufnahme der Digitalkameras sind zueinander synchronisiert, so dass die Startzeitpunkte der Belichtungen der Digitalkameras im Rahmen der Synchronisationsgenauigkeit identisch sind. Der Strahlteiler ist als dichroitischer Strahlteiler ausgebildet, so dass die Digitalkameras Licht unterschiedlicher Spektralbereiche detektieren.

Die Digitalkameras sollten zweidimensionale Felder simultan aufzeichnen und dem entsprechend jeweils eine zweidimensionale Anordnung von lichtempfindlichen Pixeln oder einen anderweitig gestalteten zweidimensionalen Sensorchip aufweisen.

Die Synchronisation der Startzeitpunkte der Belichtung der Kameras sollte mit einer Synchronisationsgenauigkeit erfolgen, die kleiner gleich 1/1000 der kürzesten Belichtungszeit der Digitalkameras ist. Dadurch wird erreicht, dass der Beginn der Bildaufnahme aller Kameras relativ zu den Belichtungszeiten aller Kameras gleichzeitig ist, so dass die aufgezeichneten Bilder gleichzeitig aufgenommenen Bildern entsprechen.

Für die Synchronisation der einzelnen Kameras sollte eine Triggereinrichtung vorgesehen sein. Weiterhin sollten die Leitungslängen zwischen der Triggereinrichtung und den Digitalkameras - bei mehr als zwei Digitalkameras, die gleichzeitige Bilder aufzeichnen sollen, die Leitungslängen zwischen der Triggereinrichtung und allen diesen Digitalkameras - bis auf weniger als 10 % der längsten der Leitungslängen identisch sein. Durch letzteres wird erreicht, dass auf den Signalwegen zwischen der Triggereinrichtung und den Kameras keine unterschiedlichen, unbekannten Verzögerungen entstehen.

Da der Strahlteiler als dichroitischer Strahlteiler ausgebildet ist, detektieren die verschiedenen Kameras ausschließlich Licht in unterschiedlichen spektralen Bändern und demzufolge geben die mit unterschiedlichen Kameras aufgezeichneten Bilder die räumliche Verteilung unterschiedlicher fluoreszierender Verbindungen oder Fluoreszenzfarbstoffe wieder. Außerdem ist es möglich, trotz der Anforderung der Aufzeichnung von Bildinformation bei unterschiedlichen Wellenlängen monochrome Kameras mit hoher Pixeldichte und damit hoher digitaler Auflösung einzusetzen. Alternativ können jedoch auch eine oder mehrere Farbkameras eingesetzt werden, um eine Farbaufteilung innerhalb der durch den dichroitischen Farbteiler bereits getrennten Spektralbereiche zu erreichen. Durch die zusätzlich gewonnene Farbinformation kann dann die Farbverschiebung aufgrund biologischer oder chemischer Vorgänge nachgewiesen und ebenfalls als Emission-Ratio dargestellt werden.

Soweit mehr als zwei zu einander synchronisierte Kameras vorgesehen sind, sind auch mehrere dichroitische Strahlteiler mit unterschiedlichen Trennungskanten vor zu sehen.

Für die Anregung von Fluoreszenzen sollte eine geeignete Beleuchtungseinrichtung vorgesehen sein. Bei einer Auflichtbeleuchtung sollte für die Trennung des Messlichts vom Anregungslicht ebenfalls ein weiterer dichroitischer Strahlteiler vorgesehen sein.

Das erfindungsgemäße optisches Bildaufnahme- und Bildauswertesystem ist als mikroskopisches, vergrößerndes System ausgebildet. Dabei ist die Ausbildung als mikroskopisches System mit einem vergrößernd abbildenden optischen System bevorzugt. Weiterhin ist insbesondere auch die Ausbildung als Zusatzmodul für Mikroskope, z.B. in Form eines an den Photostrahlengang eines Mikroskops ansetzbaren Moduls bevorzugt.

Zur Justierung der einzelnen Digitalkameras relativ zueinander, so dass beide oder sämtliche Kameras identische Bildbereiche abdecken, sollte eine Digitalkamera - bei mehr als zwei Digitalkameras alle bis auf eine Digitalkameras - zur optischen Achse des zu ihr führenden Teilstrahlengangs justierbar sein.

Das optische Bildaufnahme- und Bildauswertesystem sollte eine Bildauswerteeinheit zur Kombination der mit verschiedenen Digitalkameras aufgenommenen Bilder aufweisen. Diese Bildauswerteeinheit kann als Personal Computer mit einer geeigneten Auswertesoftware ausgebildet sein. Die Bildauswerteeinheit sollte die Bildung von Quotientenbildern ermöglichen, d.h. von Bildern, deren Helligkeits- und/oder Farbwert an einem Ort dem Quotienten der Helligkeitswerte am gleichen Ort von Teilbildern entsprechen, die mit unterschiedlichen Kameras aufgenommen wurden. Auch die Bildung von Quotienten an unterschiedlichen Orten ist sinnvoll, z.B. um Diffusionsprozesse im aufgenommenen Objekt zu analysieren.

Weiterhin sollte eine Steuereinrichtung zur Aufnahme und Abspeicherung von Bildserien gleichzeitig aufgenommener Bilder vorgesehen sein. Dadurch können Serien bei unterschiedlichen Wellenlängen gleichzeitig aufgenommener Bilder online beobachtet werden. Bei hinreichend schneller Bildverarbeitung können dann auch Quotientenbilder großer Bildfelder online beobachtet werden. Werden die Bildserien abgespeichert, kann die endgültige Auswertung nachträglich anhand von jeweils gleichzeitig aufgenommenen Bildpaaren erfolgen.

Die Aufnahmeparameter, insbesondere z.B. die Belichtungszeiten und ggf. die Empfindlichkeiten der Digitalkameras sind vorzugsweise unabhängig voneinander einstellbar, so daß die Aufnahmebedingungen an unterschiedliche Extinktionen in verschiedenen Spektralbereichen anpassbar sind. Wenn die Kameras unterschiedliche Belichtungszeiten aufweisen, dann ist die Bildwiederholrate durch die Belichtungszeit der Digitalkamera mit der längsten Belichtungszeit bestimmt, so dass die Gleichzeitigkeit der einzelnen Belichtungen beibehalten wird. Entsprechend ist die Steuereinrichtung ausgelegt, dass alle Digitalkameras mit identischer Bildwiederholrate arbeiten, also die Bildwiederholrate an die längste Belichtungszeit gekoppelt ist.

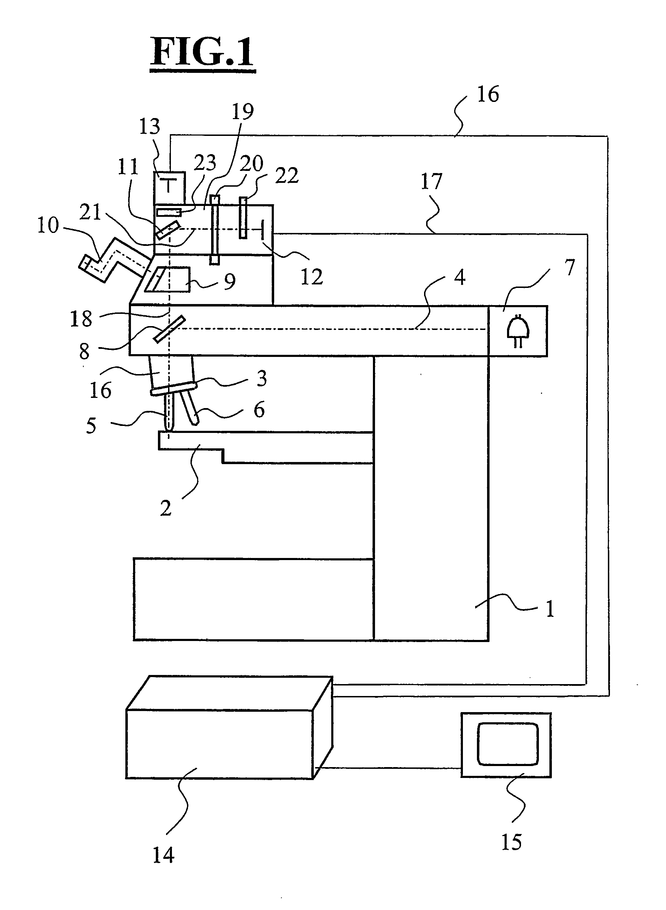

Weitere Einzelheiten der Erfindung werden nachfolgend anhand des in der Figur dargestellten Ausführungsbeispiels näher erläutert.

In der Figur ist die Erfindung schematisch in Verbindung mit einem Mikroskop dargestellt. Das Mikroskop weist in üblicher Weise ein Stativ(1) auf, an dem der Objekttisch (2) höhenverstellbar aufgenommen ist. Weiterhin ist oberhalb des Objekttisches (2) am Stativ (1) ein Objektivrevolver (3) zur Aufnahme mehrerer Objektive (5, 6) aufgenommen.

An der Rückseite des Milcroskopstativs ist eine Beleuchtungseinrichtung (7) aufgenommen, die für eine Beleuchtung eines auf dem Objekttisch (2) aufzunehmenden Präparates im Auflicht dient. Das Licht der Auflichtbeleuchtung (7) wird über einen Auflichtbeleuchtungsstrahlengang (4) durch einen Spiegel (8) oberhalb des Objektivrevolvers (3) in Richtung auf das in den Strahlengang eingeschaltete Objektiv (5) umgelenkt. Der Spiegel (8) ist dabei als dichroitischer Strahlteiler ausgebildet, um das von der Auflichtbeleuchtung (7) kommende Licht und das von einer Probe emittierte Fluoreszenzlicht von einander zu trennen.

Oberhalb des Spiegels (8) verläuft der Beobachtungsstrahlengang (18) zunächst in vertikaler Richtung. Durch ein Strahlteilerprisma (9) wird ein Teil des Beobachtungsstrahlenganges in Richtung auf einen Okulartubus (10) ausgespiegelt.

Der vom Strahlteilerprisma (9) nicht ausgespiegelte Teil des Beobachtungsstrahlenganges verläuft weiter in vertikaler Richtung in einen Kameratubus (19) mit zwei Ausgängen. Im Kameratubus (19) ist ein weiterer dichroitischer Strahlteiler (11) aufgenommen, der das Licht des Beobachtungsstrahlenganges wellenlängenabhängig auf die beiden Ausgänge des Kameratubus aufteilt.

An jeden der beiden Ausgänge des Kameratubus (19) ist jeweils eine Digitalkamera (12, 13) angeschlossen. Jede der beiden Digitalkameras (12, 13) hat einen zweidimensionalen Sensorchip und zeichnet dadurch simultan ein zweidimensionales Bildfeld auf. Beide Kameras sind miteinander über eine Synchronisationseinheit synchronisiert. Die Synchronisationseinheit ist dabei als Personal Computer (14) ausgebildet. Um die hinreichend genaue Synchronisation - gemeint ist dabei die Gleichzeitigkeit des Beginns der Belichtung und Bildaufnahme mit beiden Kameras - sicher zu stellen, sind die Leitungsverbindungen (16, 17) zwischen dem Personal Computer (14) und den beiden Kameras bis auf weniger als 10 % der längeren der beiden Leitungsverbindungen (16, 17) identisch. Dadurch wird sicher gestellt, dass der verbleibende zeitliche Unterschied zwischen dem Beginn der Bildaufzeichnung mit beiden Kameras im Bereich von 50 ns bis 100 ns liegt. Bei Belichtungszeiten der Digitalkameras über 0,1 ms ist dann gewährleistet, dass die Synchronisationsgenauigkeit unter 1/1000 der Belichtungszeit liegt.

Der Personal-Computer dient gleichzeitig auch zur Auswertung der mit beiden Kameras (12, 13) aufgenommenen Bilder und zur Darstellung des so synthetisch aus zwei oder mehr gleichzeitig aufgenommenen Bildern erzeugten Bildes auf einem Monitor (15).

Um zu gewährleisten, dass die mit den beiden Kameras (12, 13) aufgenommenen Bilder nicht nur zeitlich sondern auch räumlich überein stimmen, ist eine der Kameras (12) über eine Justiereinheit (20) senkrecht zur optischen Achse (21) des zu ihr führenden Teils des Beobachtungsstrahlenganges mit Sub-Pixelgenauigkeit justierbar. Dadurch wird erreicht, dass die von beiden Kameras (12, 13) abdeckten Bildfelder mit Sub-Pixelgenauigkeit überein stimmen. Ein entsprechender Tubus ist beispielsweise von dem Doppel-Video-Adapter der Anmelderin, der in dem eingangs genannten Prospekt beschrieben ist, bekannt.

Zwischen dem dichroitischen Strahlteiler (11) und den beiden Kameras (12, 13) sind jeweils noch Schieber (22, 23) zum Einschwenken von benötigten Farbfiltern vorgesehen. Dadurch können die bereits aufgeteilten Spektralbereiche vor der Detektion noch weiter eingeengt werden.

Dass zuvor beschriebene System kann beispielsweise zur Ca-Messung durch ein Emission-Ratio wie z.B Indo 1 und Indo 2 dienen. Die Fluoreszenzanregung erfolgt dann bei einer Wellenlänge von 340 nm und die Detektion bei 360 und 380 nm. Der dichroitische Strahlteiler(8) zur Trennung des Beleuchtungs- und Beobachtungsstrahlenganges hat dann eine Trennungskante bei einer Wellenlänge von ca. 350 nm und der Strahlteiler (21) zur Aufteilung zwischen beiden Kameras (12, 13) eine Trennungskante bei einer Wellenlänge von 370 nm. Nachfolgend bei der Bildauswertung werden an jedem Ort der aufgenommenen Bilder die Quotienten der Helligkeitsbilder beider Kameras (11, 12) gebildet und daraus ein Bild der Ca- Konzentration als Funktion des Ortes erzeugt. Da beide Bilder gleichzeitig aufgenommen werden, ist gewährleistet, dass der Quotient der Fluoreszenzintensitäten tatsächlich der Konzentration entspricht und nicht durch anderweitige Prozesse bestimmt ist.

Eine weitere Anwendung ist FRET, ein weiteres Emissions-Ratio, das jedoch auf einem einzigen Farbstoff, z.B. Chamäleon, basiert. Allerdings erfolgt hier die Anregung bei einer Wellenlänge von 480 nm und die Fluoreszenzdetektion bei 520 und 580 nm. Entsprechend sind die Trennungskanten der dichroitischen Strahlteiler (8, 21) zu wählen, so dass eine Kamera nur die Fluoreszenz bei einer Wellenlänge von 520 nm und die andere Kamera nur die Fluoreszenz bei 580 nm detektiert. Da die Extinktionen der Fluoreszenzen bei den verschiedenen Emissionswellenlängen sehr unterschiedlich sind, sollten für diese Anwendung die Einstellungen beider Kameras, insbesondere die Belichtungszeiten, unabhängig von einander wählbar sein.

Eine weitere Anwendung ist die Colocalisation. Bei dieser Anwendung ist es wichtig, ob zwei Proteine, die z.B. mit FITC und Cy3 unterschiedlich markiert sind, an der selben Stelle lokalisiert sind oder nicht. Durch die Gleichzeitigkeit der Bildaufnahme bei verschiedenen Wellenlängen können Diffusionsprozesse erkannt werden. Da auch bei dieser Anwendung in der Regel die Extinktionen der Fluoreszenzen bei den verschiedenen Emissionswellenlängen sehr unterschiedlich sind, sollten auch für diese Anwendung die Einstellungen beider Kameras unabhängig von einander wählbar sein.

Eine weitere vorteilhafte Anwendung ergibt sich, wenn eine der beiden Kameras eine Farbkamera, z.B. die Farbkamera Axiocam Color von der Anmelderin, und die andere Kamera eine monochrome Kamera, z.B. die Kamera Axiocam Mono, der Anmelderin ist. Mit einem Mikroskop, das sowohl eine Auflichtbeleuchtung für die Fluoreszenzanregung und eine Durchlichtbeleuchtung für eine Abbildung im Differential-Interferenz-Kontrast aufweist, wie die meisten konventionellen Mikroskope, lassen sich dann gleichzeitig z. B Fluoreszenz und Infrarot DIC visualisieren.

Weiterhin ist es möglich, zur Auswahl einer geeigneten Anregungswellenlänge eine breitbandige Lichtquelle mit einem nachgeschalteten Monochromator vor zu sehen. Dadurch wird die mit dem erfindungsgemäßen System mögliche hohe Flexibilität ausgenutzt. Entsprechende Monochromatoren könne z.B. einschwenk- oder einschiebbare auswechselbare Fluoreszenz-Anregungsfilter sein.

Die Bildauswerte-Einrichtung kann auch zur Aufnahme sogenannter Mosaikbilder ausgebildet sein, indem mehrere Einzelbilder nachträglich rechnerisch zu einem großen Gesamtbild zusammengesetzt werden, um Übersichtbilder zu erzeugen. Entsprechend ist dann der Objekttisch als motorischer Scanningtisch auszubilden. Durch die gleichzeitige Bildaufnahme der einzelnen Bilder in getrennten Spektralbereichen, lassen sich dann auch als Summen-, Differenz und Quotientenbilder als Mosaik-Übersichtsbilder darstellen.

Gegenüber Laser-Scan-Mikroskopen hat das erfindungsgemäße System den Vorteil, dass mit jeder Bildaufnahme simultan ein großes Bildfeld aufgenommen wird, das z.B. 1000 * 1000 Pixel oder bei Einsatz hochauflösender Digitalkameras 3900* 3090 Pixel umfassen kann. Außerdem ist das System wesentlich flexibler, da man nicht an spezielle Laserlinien zur Fluoreszenzanregung gebunden ist, sonder aus einer breitbandigen Lichtquelle den für die jeweilige Anwendung günstigen Spektralbereich heraus filtern kann.

Anhand des in den Figuren dargestellten Ausführungsbeispiels wurde die Erfindung am Beispiel eines aufrechten Mikroskopes dargestellt. Sie ist jedoch ebenso gut auch im Verbindung mit einem inversen Mikroskop einsetzbar.

## Patentansprüche

1. Mikroskopisches optisches Bildaufnahme- und Bildauswertesystem mit einem Abbildungsstrahlengang, einer Beleuchtungseinrichtung (7) für die Anregung von Fluoreszenzen, mindestens zwei Digitalkameras (12, 13), einem dichroitischen Strahlteiler (11), der das Licht des Abbildungsstrahlenganges aufteilt und zu den beiden Digitalkameras (12, 13) führt, und einer Steuereinrichtung (14) zur Aufnahme und Abspeicherung von Bildserien gleichzeitig aufgenommener Bildpaare, wobei der Startzeitpunkt der Bildaufnahme beider Digitalkameras zueinander so synchronisiert ist, dass die Startzeitpunkte der Belichtungen der Digitalkameras (12, 13) im Rahmen der Synchronisationsgenauigkeit identisch sind, und wobei die Belichtungszeiten beider Digitalkameras (12, 13) unterschiedlich einstellbar sind, **dadurch gekennzeichnet, dass** durch die Steuereinrichtung (14) die Synchronisation der Startzeitpunkte der Digitalkameras (12, 13) derart erfolgt, dass die Startzeitpunkte der Belichtungen von jeweils gleichzeitig aufgenommenen Bildpaaren der Digitalkameras (12, 13) bis auf Abweichungen kleiner gleich 1/1000 der kürzesten Belichtungszeit der Digitalkameras (12, 13) identisch sind, und dass die Bildwiederholraten beider Digitalkameras (12, 13) identisch sind, wobei die Bildwiederholrate beider Digitalkameras (12, 13) durch die Belichtungszeit derjenigen Digitalkamera (12, 13) mit der längsten Belichtungszeit bestimmt ist.

2. Optisches Bildaufnahme- und Bildauswertesystem nach Anspruch 1, wobei für die Synchronisation eine Triggereinrichtung (14) vorgesehen ist.

3. Optisches Bildaufnahme- und Bildauswertesystem nach Anspruch 2, wobei die Leitungslängen (16,17) zwischen der Triggereinrichtung und beiden Digitalkameras bis weniger als 10 % der längeren der beiden Leitungslängen (16, 17) identisch sind.

4. Optisches Bildaufnahme- und Bildauswertesystem nach einem der Ansprüche 1 - 3, wobei mindestens eine der Digitalkameras (12, 13) eine hochauflösende monochrome Kamera ist.

5. Optisches Bildaufnahme- und Bildauswertesystem nach einem der Ansprüche 1 - 4, wobei eine der Digitalkameras (12, 13) senkrecht zur optischen Achse (21) des zu ihr führenden Teilstrahlengang justierbar ist.

6. Optisches Bildaufnahme- und Bildauswertesystem nach einem der Ansprüche 1 - 5, wobei eine Bildauswerteeinheit (14) zur Kombination der mit den Digitalkameras (12, 13) aufgenommenen Bilder vorgesehen ist.

7. Optisches Bildaufnahme- und Bildauswertesystem nach Anspruch 6, wobei die Bildauswerteeinheit (14) die Bildung von Quotientenbildern ermöglicht.

## Claims

1. Microscopic optical image recording and image evaluation system comprising an imaging beam path, an illumination device (7) for the excitation of fluorescence, at least two digital cameras (12, 13) a dichroic beam splitter (11), which splits the light of the imaging beam path and passes it to the two digital cameras (12, 13), and a control device (14) for recording and storing image series of simultaneously recorded image pairs, wherein the start instant of the image recording of the two digital cameras is synchronized with one another such that the start instants of the exposures of the digital cameras (12, 13) are identical within the bounds of the synchronization accuracy, and wherein the exposure times of the two digital cameras (12, 13) can be set differently, **characterized in that** the synchronization of the start instants of the digital cameras (12, 13) is effected by the control device (14) in such a way that the start instants of the exposures of in each case simultaneously recorded image pairs of the digital cameras (12, 13) are identical down to deviations of less than or equal to 1/1000 of the shortest exposure time of the digital cameras (12, 13), and **in that** the image repetition rates of the two digital cameras (12, 13) are identical, wherein the image repetition rate of two digital cameras (12, 13) is determined by the exposure time of that digital camera (12, 13) having the longest exposure time.

2. Optical image recording and image evaluation system according to Claim 1, wherein a trigger device (14) is provided for the synchronization.

3. Optical image recording and image evaluation system according to Claim 2, wherein the line lengths (16, 17) between the trigger device and the two digital cameras are identical to less than 10% of the longer of the two line lengths (16, 17).

4. Optical image recording and image evaluation system according to any of Claims 1 - 3, wherein at least one of the digital cameras (12, 13) is a high-resolution monochrome camera.

5. Optical image recording and image evaluation system according to any of Claims 1 - 4, wherein one of the digital cameras (12, 13) can be adjusted perpendicular to the optical axis (21) of the partial beam path leading to it.

6. Optical image recording and image evaluation system according to any of Claims 1 - 5, wherein an image evaluation unit (14) is provided for the combination of the images recorded by the digital cameras (12, 13).

7. Optical image recording and image evaluation system according to Claim 6, wherein the image evaluation unit (14) enables quotient images to be formed.

## Revendications

1. Système optique microscopique d'enregistrement et d'exploitation d'images, avec un parcours optique de l'image, un dispositif d'éclairage (7) pour l'excitation de fluorescences, au moins deux appareils photo numériques (12, 13), un séparateur de faisceau dichroïque (11), qui divise la lumière du parcours optique de l'image et la guide vers les deux appareils photo numériques (12, 13), et un dispositif de commande (14) pour la prise de vue et l'enregistrement de séries d'images constituées de paires d'images prises simultanément, le point de départ de la prise de vue des deux appareils photo numériques étant synchronisé entre les deux appareils de telle sorte que les points de départ des expositions des appareils photo numériques (12, 13) sont identiques dans le cadre de la précision de synchronisation, et les temps d'exposition des deux appareils photo numériques (12, 13) pouvant être réglés de façon à être différents, **caractérisé en ce que** du fait du dispositif de commande (14), la synchronisation des points de départ des appareils photo numériques (12, 13) est réalisée de telle sorte que les points de départ des expositions de paires d'images respectives prises simultanément par les appareils photo numériques (12, 13) soient identiques, à l'exception d'écarts inférieurs ou égaux à 1/1000 du temps d'exposition le plus court des appareils photo numériques (12, 13), et **en ce que** les fréquences de rafraîchissement d'image des deux appareils photo numériques (12, 13) sont identiques, les fréquences de rafraîchissement d'image des deux appareils photo numériques (12, 13) étant déterminées par le temps d'exposition de l'appareil photo numérique (12, 13) avec le temps d'exposition le plus long.

2. Système optique d'enregistrement et d'exploitation d'images selon la revendication 1, dans lequel un dispositif de déclenchement (14) est prévu pour la synchronisation.

3. Système optique d'enregistrement et d'exploitation d'images selon la revendication 2, dans lequel les longueurs de circuit (16, 17) entre le dispositif de déclenchement (14) et les deux appareils photo numériques sont identiques, jusqu'à moins de 10 % de la plus longue des deux longueurs de circuit (16, 17).

4. Système optique d'enregistrement et d'exploitation d'images selon l'une des revendications 1 à 3, dans lequel au moins l'un des appareils photo numériques (12, 13) est un appareil photo monochrome à haute résolution.

5. Système optique d'enregistrement et d'exploitation d'images selon l'une des revendications 1 à 4, dans lequel l'un des appareils photo numériques (12, 13) peut être ajusté verticalement à l'axe optique (21) du parcours de faisceaux partiels conduisant vers lui.

6. Système optique d'enregistrement et d'exploitation d'images selon l'une des revendications 1 à 5, dans lequel une unité d'exploitation d'image (14) est prévue pour la combinaison des images prises avec les appareils photo numériques (12, 13).

7. Système optique d'enregistrement et d'exploitation d'images selon la revendication 6, dans lequel l'unité d'exploitation d'images (14) permet la formation d'images quotients.
